(19) Europäisches Patentamt
European Patent Office
Office européen des brevets

(11) EP 3 138 865 A1

(12) **EUROPÄISCHE PATENTANMELDUNG**

(43) Veröffentlichungstag:
**08.03.2017 Patentblatt 2017/10**

(51) Int Cl.:
***C08G 65/26*** *(2006.01)*

(21) Anmeldenummer: **15184129.3**

(22) Anmeldetag: **07.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **BASF SE**
**67056 Ludwigshafen am Rhein (DE)**

(72) Erfinder:
- **KOENIG, Christian**
  **68165 Mannheim (DE)**
- **ZARBAKHSH, Sirus**
  **67117 Limburgerhof (DE)**

(74) Vertreter: **BASF IP Association**
**BASF SE**
**ZRX-C6**
**67056 Ludwigshafen (DE)**

(54) **VERFAHREN ZUR HERSTELLUNG VON POLYETHERPOLYOLEN**

(57) Die vorliegende Erfindung befasst sich mit einem Verfahren zur Herstellung von Polyetherpolyolen unter Multimetallcyanidkatalyse.

EP 3 138 865 A1

## Beschreibung

Die vorliegende Erfindung befasst sich mit einem Verfahren zur Herstellung von Polyetherpolyolen unter Multimetallcyanidkatalyse.

Beim Einsatz von Multimetallcyanidkatalysatoren, wie bspw. Doppelmetallcyanidkatalysatoren (sog. DMC-Katalysatoren), zur Herstellung von Polyether-Polyolen (PEOLen) können keine Starter mit einem sehr geringen Molgewicht alleine eingesetzt werden, da diese den Katalysator vergiften können. Somit können unter anderem übliche Standard-Starter für Alkoxylierungsprozesse wie zum Beispiel Glycerin, Monopropylenglykol (MPG) oder Trimethylolpropan (TMP) nicht alleine eingesetzt werden.

DMC-Katalysatoren sind unter vielen Aspekten einzigartig. Zum Beispiel war bei DMC-Katalysatoren ein Induktionszeitraum bis zum Aktivwerden des Katalysators erforderlich. Der Katalysator wird mit dem Starter vermischt, und Spuren an Wasser und Luft werden entfernt. Die Katalysatoraktivierung nach der anfänglichen Einführung von Alkylenoxid wird durch einen bemerkenswerten Druckabfall verifiziert. Nach der Aktivierung schreitet die Polymerisation rasch fort, wenn zusätzliches Alkylenoxid zugegeben wird. Mischungen aus vor-aktiviertem Katalysator/Starter können zur späteren Verwendung aufbewahrt werden, vorausgesetzt, dass auf den Ausschluss von Feuchtigkeit, Sauerstoff etc. geachtet wird. Startermoleküle mit niedriger Molmasse weisen eine Tendenz zu langen Induktionszeiten auf, und in einigen Fällen wird der Katalysator mit Startermolekülen mit niedriger Molmasse, wie Wasser, Ethylenglycol, Propylenglycol etc., möglicherweise nicht aktiviert oder wird zeitweilig aktiviert, gefolgt von einer Deaktivierung.

Es ist bekannt, dass DMC-Katalysatoren, sobald sie aktiviert sind, unwirksam sind, wenn sie mit Startermolekülen mit einer sehr niedrigen Molmasse verwendet werden. Propylenglycol und Wasser werden oft sehr träge oxyalkyliert und führen manchmal zur Deaktivierung des Katalysators. Aus diesem Grund werden gewöhnlich Startermoleküle mit einer höheren Molmasse, zum Beispiel diejenigen mit einer Molmasse im Bereich von 300 Da mit 2000 Da, verwendet. Oligomere oder polymere Startermoleküle mit einer niedrigeren Molmasse, z.B. diejenigen mit Äquivalenzmassen im Bereich von 150 Da bis 1000 Da, können durch eine herkömmliche Basenkatalyse hergestellt werden. Der basische Katalysator muss aber gründlich von diesen Startern gereinigt werden, weil sogar Spuren starker Basen DMC-Katalysatoren deaktivieren.

Um der Vergiftung des DMC-Kats durch den Einsatz niedrigmolekularer Starter entgegenzuwirken, ist es im Stand der Technik üblich, zusätzlich ein höhermolekulares Vorlagepolyol einzusetzen, wie bspw. Polypropylenglykol (PPG) mit einem Molgewicht von ca. 400 g/mol bis 4000 g/mol, zu welchem ein niedermolekularer Starter zu dosiert wird, zum Beispiel Proplyenglykol. (Siehe DE69735298 T2)

Durch die Verwendung eines zusätzlichen höhermolekularen Vorlagepolyols $S_{vor}$ für die Alkoxylierung, dessen Molgewicht zwischen dem Molgewicht der Starterverbindung $S_{Dos}$ und dem Molgewicht des Endprodukts liegt, wird jedoch ein zusätzlicher Verfahrensschritt nötig, da der höhermolekulare Starter (Vorlagepolyol) erst hergestellt werden muss.

Um diesen zusätzlichen Verfahrensschritt zu vermeiden, ist der direkte Einsatz des herzustellenden PEOL-Endprodukts möglich. (vgl. sog. "Heel"-Verfahren). Dadurch muss nur einmalig, für die erste Durchführung der Reaktion, das Vorlagepolyol hergestellt werden. In nachfolgenden Wiederholungen des DMC-katalysierten Alkoxylierungsverfahrens kann auf den anderweitig hergestellten höhermolekularen Starter verzichtet werden. Stattdessen kommt dann das Endprodukt des ersten Herstellungsvorgangs (sog. "Vorlage-Polyol") als höhermolekularer Starter zum Einsatz (neben dem niedermolekularen Starter, wie bspw. Monopropylenglykol (MPG) oder Glycerin). Die Komplexität wird also reduziert.

Diese Vorgehensweise bringt jedoch wieder andere Probleme mit sich. Denn bei der Verwendung des Endproduktes als Vorlage-Polyol und Dosierung einer niedermolekularer Starterverbindung wird oftmals keine ausreichend monomodale Verteilung des Endprodukts erreicht, da das bei dem diesem Verfahren vorgelegte Endprodukt ("Vorlagepolyol") ebenfalls weiter mit Alkylenoxiden reagieren kann und somit zu einer breiteren Molgewichtsverteilungen führt.

DE 69804234 T3 (WO9914258) beschreibt die direkte Alkoxylierung von säureempfindlichen Startern mit einem Molekulargewicht unter 400 Da in Gegenwart eines DMC Katalysators. Der Einsatz des Endproduktes als Vorlagepolyol wird in diesem Patent nicht beschrieben. Das Molekulargewicht des vorgelegten Polyols entspricht in etwa der Hälfte des Molekulargewichts des Endprodukts. Im vorliegenden erfindungsgemäßen Verfahren entspricht das Molekulargewicht des Vorlagepolyols dem des Produkts.

EP1808475 A2 offenbart ein Verfahren zur Herstellung eines wassermischbaren Metallverarbeitungsfluids z. B. bestehend aus einem Alkoxylat von Butanol mit Ethylenoxid (EO)/Propylen-oxid (PO), als Vorlagepolyol wird ein Produkt aus Butanol mit EO/PO eingesetzt, welches eine OH-Zahl von 35 aufweist. Dieses Produkt wird vorgelegt und durch Zugabe von EO/PO und Butanol ein Produkt mit einer OH-Zahl von 34 hergestellt. Bei diesem Beispiel werden einfunktionelle Starter verwendet. Dosierraten und Molgewichtsverteilungen sind nicht beschrieben und Polydispersitäten der Produkte sind nicht angegeben.

WO2011113792 beschreibt einen Prozess zur Herstellung von Polyetherpolyolen mit einer OH-Zahl von 15-120 mg KOH/g unter Verwendung eines Heel-Verfahrens. Hier werden ebenfalls keine Dosierraten und Molgewichtsverteilungen beschrieben, daher muss davon ausgegangen werden, dass nur eine breite Molgewichtsverteilung erhalten wird.

EP1528073 beschreibt die Herstellung von EO gekappten Polyolen durch DMC Katalyse. Die OH-Zahl des eingesetzten Vorlagepolyols liegt bei 240mg KOH/g und die des Endprodukts bei 24.9 mg KOH/G, wobei das Endprodukt einen primären OH-Gehalt von 86% aufweist.

EP1983016 A beschreibt einen Prozess für die Ethoxylierung von Alkylphenolen. Anspruch 1 beschränkt sich ausschließlich auf die Ethoxylierung, die zudosierten Starter beschränken sich auf monofunktionelle Alkylphenole. In den Beispielen wir ein Anfangspolyole bestehend aus Nonylphenol mit 9.5EO vorgelegt, wird Nonylphenol mit EO nachdosiert, um das Endprodukt zu erhalten. Die enthaltenen Beispiele verwenden ausschließlich Ethylenoxid und es sind keine Polydispersitäten beschrieben.

EP1983015 beschreibt ein Product to product verfahren, jedoch nur für die Ethoxylierung von monofunktionellen Polyolen. Hierbei soll der Anteil von zudosierten, unreagierten Vorlagepolyol so gering wie möglich gehalten werden. Das hier beschriebene Verfahren unterscheidet sich jedoch grundlegend, da ausschließlich Fettalkohole als zudosierter Starter eingesetzt werden und das gewählte Alkylenoxid nur Ethylenoxid ist. Hier werden ebenfalls keine Molgewichtsverteilungen beschrieben.

Es war somit eine Aufgabe der vorliegenden Erfindung, die Nachteile der bekannten Verfahren zu vermeiden. Es sollte also ein möglichst einfaches Verfahren bereitgestellt werden, in dem auf die aufwändige Herstellung eines zusätzlichen, vom PEOL-Endprodukt verschiedenen höhermolekularen Starters verzichtet werden kann.

Weiterhin war es ein Ziel, eine enge Molgewichtsverteilung des hergestellten PEOLs zu erreichen, wenn möglich eine monomodale Verteilung.

Überraschenderweise konnte diese Aufgabe gelöst werden durch ein Verfahren, in dem ein Vorlagepolyol (PEOL) neben einem niedermolekularen Starter verwendet wird und bei dem das Verhältnis der Summe der Dosiergeschwindigkeiten aller dosierten Alkylenoxide zur Summe der Dosiergeschwindigkeiten aller dosierten Zerewitinoff-aktiven Starterverbindungen in einem gewissen Bereich, insbesondere unter 20 liegt.

Der Gegenstand der vorliegenden Erfindung ist also ein Verfahren zur Herstellung von Polyetherpolyolen, bevorzugt von Polyetherpolyolen mit einer Funktionalität von mindestens 2, durch Reaktion mindestens eines Alkylenoxids AO mit mindestens einer Zerewitinoff-aktiven Starterverbindung S unter Multimetallcyanid-Katalyse, wobei

(i) zunächst mindestens eine Zerewitinoff-aktive Starterverbindung $S_{vor}$ im Reaktionsgefäß vorgelegt und mit dem Multimetallycanidkatalystor, bevorzugt einer Suspension des Multimetallkatalysators in einem Polyetherol oder einem Gemisch aus Polyetherolen, versetzt wird,
(ii) dann, optional nach Entfernen von Restsauerstoff aus dem Reaktionsgefäß und Trocknung des Reaktorinhalts, mindestens ein Alkylenoxid $AO_1$ zugegeben und der Reaktorinhalt für eine Zeitspanne von 1 bis 60 min, bevorzugt 5 bis 30 min, gerührt wird,
(iii) darauf die Dosierung mindestens eines Alkylenoxids $AO_2$ gestartet und fortgeführt wird, und
(iv) die Dosierung mindestens einer Zerewitinoff-aktiven Starterverbindung $S_{dos}$ gestartet und fortgeführt wird, wobei die Dosierung mindestens einer, bevorzugt aller Zerewitinoff-aktiven Starterverbindungen $S_{dos}$ optional für eine Zeitspanne von 1 min bis 30 min, bevorzugt 1 bis 10 min, besonders bevorzugt 1 bis 5 min, nach Beginn der Dosierung mindestens einer, bevorzugt aller Alkylenoxide $AO_2$ beginnt, und wobei

während der gleichzeitigen Dosierung mindestens eines Alkylenoxids $AO_2$ mit mindestens einer Zerewitinoff-aktiven Starterverbindung $S_{dos}$ das Verhältnis der Dosiergeschwindigkeiten K kleiner gleich 20 beträgt, wobei

$$K \text{ der Formel } K = (DAO_2)/\ (DS_{dos}) \text{ genügt,}$$

mit $(DAO_2)$ = (mittlere Dosiergeschwindigkeit der Alkylenoxide $AO_2$) und $(DS_{dos})$ = (mittlere Dosiergeschwindigkeit der Starterverbindungen $S_{dos}$),
wobei die mittlere Dosiergeschwindigkeit der Alkylenoxide $AO_2$ der Quotient ist aus der (Summe der Mengen aller dosierten Alkylenoxide $AO_2$) geteilt durch die (Zeit von Beginn der ersten Dosierung eines Alkylenoxids $AO_2$ bis zum Ende der letzten Dosierung eines Alkylenoxids $AO_2$), und
wobei die mittlere Dosiergeschwindigkeit der Zerewitinoff-aktiven Starterverbindungen $S_{dos}$ der Quotient ist aus der (Summe der Mengen aller dosierten Starterverbindungen $S_{dos}$) geteilt durch die (Zeit von Beginn der ersten Dosierung einer Zerewitinoff-aktiven Starterverbindung $S_{dos}$ bis zum Ende der letzten Dosierung einer Zerewitinoff-aktiven Starterverbindung $S_{dos}$).

Weitere Gegenstände sind auch ein Polyetherpolyol, herstellbar nach dem erfindungsgemäßen Verfahren, sowie ein Verfahren zur Herstellung eines Polyurethans, wobei ein Polyetherpolyol, herstellbar nach dem erfindungsgemäßen Verfahren, mit mindestens einem Di- oder Polyisocyanat zur Reaktion gebracht wird, wahlweise in Gegenwart

eines Treibmittels.

In einer Ausführungsform des erfindungsgemäßen Verfahrens beginnt im Schritt (iv) die Dosierung der Komponenten $S_{dos}$ und $AO_2$ gleichzeitig.

Erfindungsgemäß beträgt das Verhältnis der Dosiergeschwindigkeiten K kleiner gleich 20, bevorzugt kleiner 20, besonders bevorzugt kleiner 15, ganz besonders bevorzugt kleiner 10.

Die jeweiligen Dosiergeschwindigkeiten der Alkylenoxide und der Zerewitinoff-aktiven Verbindungen bleiben in der Regel über die Zeit konstant. In gewissen Ausführungsformen können jedoch die jeweiligen Dosiergeschwindigkeiten der Alkylenoxide und/oder der Zerewitinoff-aktiven Verbindungen vor und während der Reaktionsdurchführung zeitlich variieren.

In einer Ausführungsform des erfindungsgemäßen Verfahrens variiert die Dosiergeschwindigkeit der jeweiligen zu dosierenden Komponenten $S_{dos}$ und $AO_2$ während der Dosierzeit unabhängig voneinander.

In einer weiteren Ausführungsform des erfindungsgemäßen Verfahrens sind die die Dosiergeschwindigkeiten der jeweiligen zu dosierenden Komponenten $S_{dos}$ und/oder $AO_2$ während der Dosierzeit konstant.

In einer Ausführungsform des erfindungsgemäßen Verfahrens sind die Alkylenoxide $AO_1$ und $AO_2$ jeweils unabhängig voneinander ausgewählt sind aus der Gruppe enthaltend, bevorzugt bestehend aus, Ethylenoxid, Propylenoxid, Butylenoxid.

In einer Ausführungsform des erfindungsgemäßen Verfahrens ist mindestens ein Alkylenoxid Propylenoxid.

In einer Ausführungsform des erfindungsgemäßen Verfahrens wird ausschließlich Propylenoxid als Alkylenoxid verwendet.

In einer Ausführungsform des erfindungsgemäßen Verfahrens wird als Alkylenoxid kein Ethylenoxid verwendet.

In einer Ausführungsform des erfindungsgemäßen Verfahrens wird als Alkylenoxid kein Butylenoxid verwendet.

In einer Ausführungsform des erfindungsgemäßen Verfahrens beträgt die gesamte Menge an $AO_1$ kleiner als 5 Gew. %, bezogen auf die Summe der gesamten Mengen an $AO_1$ und $AO_2$.

In einer Ausführungsform des erfindungsgemäßen Verfahrens ist $AO_1$ gleich $AO_2$.

In einer anderen Ausführungsform des erfindungsgemäßen Verfahrens ist $AO_1$ ungleich $AO_2$.

In einer Ausführungsform des erfindungsgemäßen Verfahrens beträgt der Anteil des Alkylenoxids $AO_1$ 0,1 bis 10 Gew.-%, bezogen auf die eingesetzte Gesamtalkylenoxidmenge $AO_1$ und $AO_2$.

In einer Ausführungsform des erfindungsgemäßen Verfahrens beträgt die gesamte Reaktionszeit höchstens zwanzig Stunden, bevorzugt höchstens zehn Stunden, besonders bevorzugt höchstens fünf Stunden. Dabei entspricht die "gesamte Reaktionszeit" dem Zeitraum von der Zugabe mindestens eines Katalysators bis zur Entfernung des Rest-Alkylenoxids am Ende der Reaktion.

In einer Ausführungsform des erfindungsgemäßen Verfahrens ist mindestens eine Zerewitinoff-aktive Starterverbindung $S_{dos}$ ausgewählt aus der Gruppe bestehend aus Ethylenglykol, Diethylenglykol, Mono-Propylenglykol, Di-Propylenglykol, Propoxylate von Glycerin, Ethoxylate von Glycerin, Propoxylate von Propylenglykol und Ethoxylate von Ethylenglykol.

In einer weiteren Ausführungsform des erfindungsgemäßen Verfahrens ist mindestens eine Zerewitinoff-aktive Starterverbindung $S_{dos}$ ausgewählt aus der Gruppe bestehend aus Mono-Propylenglykol und Dipropylenglykol.

In einer bevorzugten Ausführungsform des erfindungsgemäßen Verfahrens sind alle verwendeten Zerewitinoff-aktiven Starterverbindungen $S_{dos}$ ausgewählt aus der Gruppe bestehend aus Mono-Propylenglykol (MPG) und Dipropylenglykol (DPG).

In einer Ausführungsform des erfindungsgemäßen Verfahrens weist mindestens eine Zerewitinoff-aktive Starterverbindung $S_{vor}$ eine OH-Zahl im Bereich von 400 bis 3000, bevorzugt 700 bis 2500, besonders bevorzugt 800 bis 2200 mg KOH/g auf, gemessen nach DIN 53240.

In einer weiteren Ausführungsform des erfindungsgemäßen Verfahrens weisen alle verwendeten Zerewitinoff-aktiven Starterverbindungen $S_{vor}$ jeweils eine OH-Zahl im Bereich von 400 bis 3000 bevorzugt 700 bis 2500, besonders bevorzugt 800 bis 2200 mg KOH/g auf, gemessen nach DIN 53240.

In einer weiteren Ausführungsform des erfindungsgemäßen Verfahrens weist mindestens eine Zerewitinoff-aktive Starterverbindung $S_{vor}$ eine OH-Zahl auf, die sich von der OH-Zahl des Polyetherol-Endprodukts maximal um 15 % unterscheidet, bevorzugt maximal um 10 %, besonders bevorzugt maximal um 5 %, jeweils gemessen nach DIN 53240.

In einer weiteren Ausführungsform des erfindungsgemäßen Verfahrens ist mindestens eine Zerewitinoff-aktive Starterverbindung $S_{vor}$ Polyproplenglykol mit einem über die OH-Zahl nach DIN 53240 und Funktionalität berechneten mittleren Molgewicht von 2000 +/- 5 % (PPG 2000).

In einer Ausführungsform des erfindungsgemäßen Verfahrens erfolgt die Dosierung mindestens eines Alkylenoxids $AO_2$ für mindestens 30 Minuten, bevorzugt für mindestens 90 Minuten gleichzeitig mit der Dosierung mindestens einer Zerewitinoff-aktiven Starterverbindung $S_{dos}$.

In einer weiteren Ausführungsform des erfindungsgemäßen Verfahrens erfolgt die Dosierung aller Alkylenoxide zumindest zeitweise gleichzeitig mit der Dosierung aller Zerewitinoff-aktiven Starterverbindungen.

In einer weiteren Ausführungsform des erfindungsgemäßen Verfahrens erfolgt die Dosierung aller Alkylenoxide

$AO_2$ für mindestens 30 Minuten, bevorzugt für mindestens 90 Minuten gleichzeitig mit der Dosierung aller Zerewitinoff-aktiven Starterverbindungen $S_{dos}$.

In einer weiteren Ausführungsform des erfindungsgemäßen Verfahrens beginnt die Dosierung mindestens eines Alkylenoxids $AO_2$ vor dem Beginn der Dosierung mindestens einer Zerewitinoff-aktiven Starterverbindung $S_{dos}$.

In einer weiteren Ausführungsform des erfindungsgemäßen Verfahrens beginnt die Dosierung mindestens eines Alkylenoxids $AO_2$ mindestens 5 Minuten, optional mindestens 10 Minuten, vor dem Beginn der Dosierung mindestens einer Zerewitinoff-aktiven Starterverbindung $S_{dos}$.

In einer weiteren Ausführungsform des erfindungsgemäßen Verfahrens beginnt die Dosierung aller Alkylenoxide $AO_2$ vor jeglicher Dosierung von Zerewitinoff-aktiven Starterverbindungen $S_{dos}$.

In einer weiteren Ausführungsform des erfindungsgemäßen Verfahrens beginnt die Dosierung aller Alkylenoxide $AO_2$ mindestens 5 Minuten, optional mindestens 10 Minuten vor jeglicher Dosierung von Zerewitinoff-aktiven Starterverbindungen $S_{dos}$.

In einer Ausführungsform des erfindungsgemäßen Verfahrens beträgt der Anteil von Ethylenoxid im Polyetherpolyol-Produkt kleiner als 15 Gew %, bezogen auf das Gesamtprodukt.

In der Regel wird beim erfindungsgemäßen Verfahren die Dosierung aller Alkylenoxide gleichzeitig mit der Dosierung aller Zerewitinoff-aktiven Starterverbindungen beendet. Es ist jedoch auch möglich, die Dosierströme zu unterschiedlichen Zeitpunkten zu stoppen.

Im Sinne dieser Erfindung werden bevorzugt Vorlagepolyole eingesetzt, die eine maximale Abweichung der OH-Zahl des Endproduktes von ± 15% haben und aus der gleichen Funktionalität und den gleichen chemischen Aufbau (den gleichen Chemikalien bestehen) wie das Endprodukt. Diese Vorlagepolyole und somit Produkte können bevorzugt Funktionalitäten von 1 bis 6, bevorzugt 2 bis 3 aufweisen. Die OH-Zahlbereiche sind in der Regel 10 bis 100 mg KOH/g, bevorzugt 25-75 mg KOH/g, besonders bevorzugt 35-65 mg KOH/g. Die Molgewichtsbereiche MW liegen in der Regel zwischen 500 - 8000 g/mol, bevorzugt 700 bis 6000 g/mol, besonders bevorzugt 800 bis 4000 g/mol.

Der erfindungsgemäß eingesetzte Multimetallcyanid-Katalysator wird bevorzugt ausgewählt aus der Gruppe bestehend aus Doppelmetallcyanid-Katalysatoren, bevorzugt kristallinen oder nicht kristallinen Doppelmetallcyanid-Katalysatoren.

In einer Ausführungsform ist der Multimetallcyanid-Katalysator ein kristalliner Doppelmetallcyanid (DMC-)-Katalysator und weist eine plättchenartige Morphologie auf. Derartige Katalysatoren sind in WO 00/74845 beschrieben.

In einer Ausführungsform ist der Multimetallcyanid-Katalysator Zinkhexacyanocobaltat, bevorzugt kristallines Zinkhexacyanocobaltat.

Die Herstellung von DMC Katalysatoren wird beschrieben in den U.S.-Patenten Nrn. 5,470,813 und 5,714,639.

Kristalline DMC Katalysatoren sind zum Beispiel beschrieben in US 6,303,833 B1, US 6,613,714 B2, US 6,689,710 B2, US 7,470,823 B2, US 2004/249221 A1, US 2005/0203274 A1, and US 2008/300376 A1.

Üblicherweise wird beim erfindungsgemäßen Verfahren vor Beginn der Reaktion Sauerstoff entfernt, z. B. durch mehrmaliges Aufdrücken von Stickstoff. Zudem wird üblicherweise vor Beginn der Alkylenoxid-Dosierung der Reaktorinhalt getrocknet (in der Regel unter Anlegen eines Vakuums).

Vor Beginn der eigentlichen Alkylenoxid-Dosierung wird in einer Ausführungsform bereits ein geringer Anteil des gesamten zu dosierenden Alkylenoxids in den Reaktor gegeben und dann einige Minuten gerührt. Üblicherweise wird auf diese Weise ein Anteil von maximal 5 Gew. %, bevorzugt maximal 3 Gew. % des gesamten zu dosierenden Alkylenoxids zugegeben und in der Folge für 5 bis 30 min, bevorzugt 10 bis 20 min gerührt. Erst danach beginnt in einer Ausführungsform die Dosierung des restlichen Alkylenoxids.

Nach Abschluss aller Dosierungen von Reaktanden - üblicherweise werden alle Dosierungen von Reaktanden gleichzeitig beendet - schließt sich in der Regel eine Nachreaktionszeit von 15 min bis 3 h an, bevorzugt von 30 min bis 60 min.

Schließlich wird das Reaktionsgemisch in der Regel abgekühlt und es werden dann durch Anlegen eines Vakuums die verbliebenen flüchtigen Verbindungen entfernt.

Die erfindungsgemäß herstellbaren Polyetherpolyole (PEOL) können vorteilhaft zur Produktion von Polyurethanen (PU) verwendet werden, bspw. von PU-Hart- oder Weichschäumen.

Dazu wird mindestens ein erfindungsgemäß herstellbares PEOL, ggf. im Gemisch mit anderen PEOLen, mit mindestens einem Di- oder Polyisocyanat, wie z. B. MDI (Diphenylmethan-Diisocyanat) oder TDI (Toluylen-Diisocyanat), umgesetzt, wahlweise unter Einsatz eines Treibmittels.

Geeignete Reaktionsbedingungen sind dem Fachmann bekannt und vielfach in der Literatur beschrieben, z. B. in dem Standardwerk "Chemistry and Technology of Polyols for Polyurethanes" von Mihail Ionescu (2005, rapra Technolgy Limited; siehe insbesondere Kapitel 2).

## Beispiele

In den folgenden Absätzen werden zur Illustration einiger Aspekte der vorliegenden Erfindung experimentelle

Beispiele angegeben.

Allgemeine Versuchsvorschrift

In einen 600 L Autoklaven wurde das Vorlagepolyol vorgelegt und mit der DMC-Suspension versetzt. Bei dem Vorlagepolyol handelt es sich entweder um PPG 1000 mit Mw 1000 g/mol oder um ein Polyol analog zu dem herzustellenden Endprodukt, welches entweder durch KOH oder DMC Katalyse hergestellt wird, bevorzugt durch DMC Katalyse (bei Einsatz von KOH als Katalysator muss das Polyol ggf. vor der weiteren Verwendung aufgearbeitet werden, z. B. durch Neutralisation und Filtration). Restsauerstoff wurde anschließend durch dreimaliges Aufdrücken von Stickstoff und anschließenden Ablassen des Überdrucks auf Atmosphährendruck entfernt. Anschließend erfolgte eine Trocknung des Reaktorinhalts. Unter Rühren wurde nach Erreichen des vollen Vakuums (unter 30 mbar) 45 min bei 135 °C getrocknet, um einen Wasserwert von kleiner 100 ppm zu erreichen. Anschließend wurden ca. 2% des Propylenoxids in den Reaktor zugegeben und 15 min gerührt. Nun wurde die Propylenoxid-Dosierung mit der angegebenen Dosierrate gestartet und 3 Minuten zeitversetzt die MPG-Dosierung mit der angegebenen Dosierrate gestartet. Nach Abschluss alle Dosierungen schloss sich eine Nachreaktionszeit von 45 min an. Das Reaktionsgemisch wurde auf 100 °C abgekühlt und bei vollem Vakuum 45 min alle flüchtigen Verbindungen entfernt.

Versuch 1: Herstellung des Produkts unter Verwendung eines Vorlagepolyols mit geringerer Molmasse als das Endprodukt

PO Menge 502,2 kg, MPG Menge 17,3 kg, PPG1000 79,8 kg
Mittlere PO Dosierungsgeschwindigkeit: 196 kg/h
Mittlere MPG Dosierungsgeschwindigkeit: 7.7 kg/h
Verhältnis der mittleren PO zur mittleren MPG Dosiergeschwindigkeit während der gleichzeitigen Dosierungsphase: PO/MPG = 25,5

Das Endprodukt wies die folgenden Kennzahlen auf:

| | |
|---|---|
| Hydroxywert: 53,8 mgKOH/g | (DIN 53240) |
| Viskosität (bei 25°C): 363 mPas | (DIN 51550) |
| Wassergehalt: 0,003 % | (DIN 51777) |
| Säurezahl: 0,005 mg KOH/g | (DIN 53402) |

Über Größenausschlußchromatographie (THF als Eluent und Polyethylen- und Polypropylenglykolstandards von der Firma PSS im Bereich von 76- 5430 g/mol) wurde eine Polydispersität (Mw/Mn) von 1,12 ermittelt.

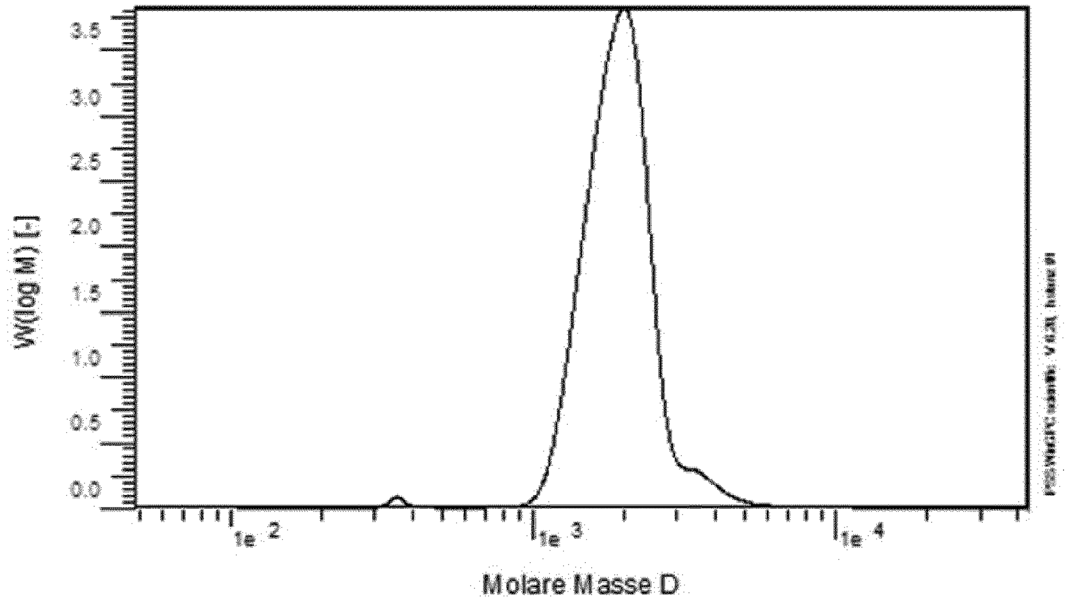


| | | |
|---|---|---|
| Mn : | 1.7965e3 | g/mol |
| Mw : | 2.0126e3 | g/mol |
| Mz : | 2.3716e3 | g/mol |
| Mv : | 2.0126e3 | g/mol |
| D : | 1.1203e0 | |
| [n]: | 0.000000 | ml/g |
| Vp : | 1.8307e1 | ml |
| Mp : | 2.0405e3 | g/mol |
| FI : | 2.1443e4 | ml*V |
| < 48 | 0.00 | |
| w% : | 100.00 | |
| > 43507 | 0.00 | |

Versuch 2: Herstellung des Produkts unter Verwendung des Endprodukts ohne Optimierung

PO Menge 490,5 kg, MPG Menge 19,3 kg, Produktheel (entspricht dem herzustellenden Endprodukt mit einer OH-Zahl von 54 mg KOH/G)89,3 kg
Mittlere PO Dosierungsgeschwindigkeit: 191,2 kg/h
Mittlere MPG Dosierungsgeschwindigkeit: 8,9 kg/h
Verhältnis der mittleren PO zur mittleren MPG Dosiergeschwindigkeit während der gleichzeitigen Dosierungsphase:: PO/MPG = 21,5

Das Endprodukt wies die folgenden Kennzahlen auf:

| | |
|---|---|
| Hydroxywert: 54,3 mgKOH/g | (DIN 53240) |
| Viskosität (bei 25°C): 368 mPas | (DIN 51550) |
| Wassergehalt: 0,003 % | (DIN 51777) |
| Säurezahl: 0,005 mg KOH/g | (DIN 53402) |

Über Größenausschlußchromatographie (THF als Eluent und Polyethylen- und Polypropylenglykolstandards von der Firma PSS im Bereich von 76- 5430 g/mol) wurde eine Polydispersität (Mw/Mn) von 1,14 ermittelt.
Man erhält eine bimodale Verteilung (siehe Figur).

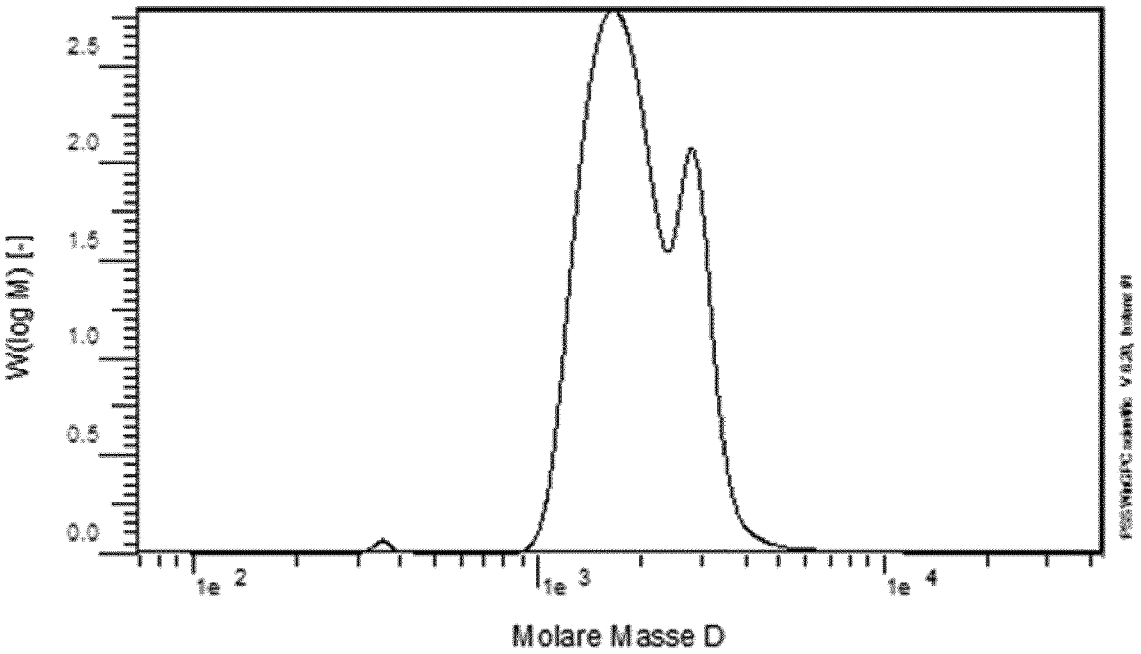


| | | |
|---|---|---|
| Mn : | 1.8207e3 | g/mol |
| Mw : | 2.0670e3 | g/mol |
| Mz : | 2.4335e3 | g/mol |
| Mv : | 2.0670e3 | g/mol |
| D : | 1.1353e0 | |
| [n]: | 0.000000 | ml/g |
| Vp : | 1.8654e1 | ml |
| Mp : | 1.7114e3 | g/mol |
| FI : | 2.2272e4 | ml*V |
| < 68 | 0.00 | |
| w% : | 100.00 | |
| > 43507 | 0.00 | |

Versuch 3: Herstellung des Produkts unter Verwendung des Endprodukts mit leichter Optimierung

PO Menge 490,5 kg, MPG Menge 19,3 kg, Produktheel (entspricht dem herzustellenden Endprodukt mit einer OH-Zahl von 54 mg KOH/G) 89,3 kg
Mittlere PO Dosierungsgeschwindigkeit: 191,2 kg/h
Mittlere MPG Dosierungsgeschwindigkeit: 12,0 kg/h
Verhältnis der mittleren PO zur mittleren MPG Dosiergeschwindigkeit während der gleichzeitigen Dosierungsphase: PO/MPG = 15,9

Das Endprodukt wies die folgenden Kennzahlen auf:

| | |
|---|---|
| Hydroxywert: 54,0 mgKOH/g | (DIN 53240) |
| Viskosität (bei 25°C): 348 mPas | (DIN 51550) |
| Wassergehalt: 0,002 % | (DIN 51777) |
| Säurezahl: 0,003 mg KOH/g | (DIN 53402) |

Über Größenausschlußchromatographie (THF als Eluent und Polyethylen- und Polypropylenglykolstandards von der Firma PSS im Bereich von 76- 5430 g/mol) wurde eine Polydispersität (Mw/Mn) von 1,13 ermittelt.
Man erhält eine leicht bimodale Verteilung (siehe Figur).

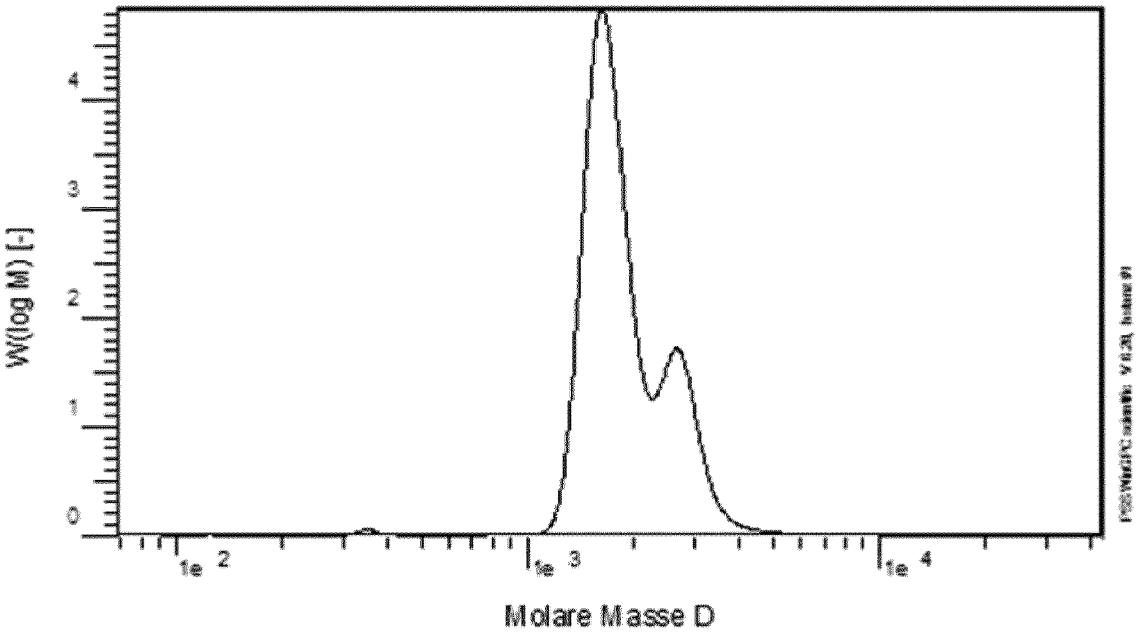


| | | |
|---|---|---|
| Mn : | 1.7699e3 | g/mol |
| Mw : | 1.9999e3 | g/mol |
| Mz : | 2.3343e3 | g/mol |
| Mv : | 1.9999e3 | g/mol |
| D : | 1.1299e0 | |
| [n]: | 0.000000 | ml/g |
| Vp : | 1.8728e1 | ml |
| Mp : | 1.6506e3 | g/mol |
| FI : | 2.1841e4 | ml*V |
| < 68 | 0.00 | |
| w% : | 100.00 | |
| > 43507 | 0.00 | |

Versuch 4: Herstellung des Produkts unter Verwendung des Endprodukts mit sehr guter Optimierung

PO Menge 490,5 kg, MPG Menge 19,3 kg, Produktheel (entspricht dem herzustellenden Endprodukt mit einer OH-Zahl von 54 mg KOH/G) 89,3 kg
Mittlere PO Dosierungsgeschwindigkeit: 191,2 kg/h
Mittlere MPG Dosierungsgeschwindigkeit: 23,2 kg/h
Verhältnis der mittleren PO zur mittleren MPG Dosiergeschwindigkeit während der gleichzeitigen Dosierungsphase: PO/MPG = 8,2

Das Endprodukt wies die folgenden Kennzahlen auf:

| | |
|---|---|
| Hydroxywert: 54,1 mgKOH/g | (DIN 53240) |
| Viskosität (bei 25°C): 347 mPas | (DIN 51550) |
| Wassergehalt: 0,003 % | (DIN 51777) |
| Säurezahl: 0,006 mg KOH/g | (DIN 53402) |

Über Größenausschlusschromatographie (THF als Eluent und Polyethylen- und Polypropylenglykolstandards von der Firma PSS im Bereich von 76- 5430 g/mol) wurde eine Polydispersität (Mw/Mn) von 1,15 ermittelt.

Man erhält eine fast perfekt monomodale Verteilung (siehe Figur).

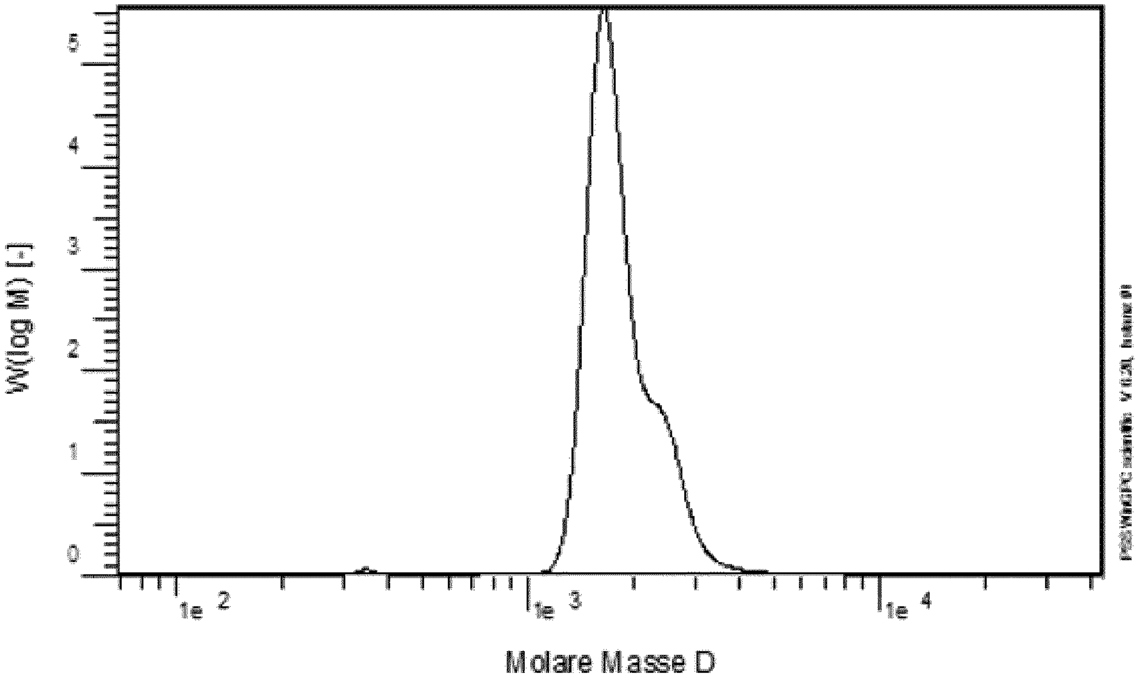


| | | |
|---|---|---|
| Mn : | 1.6468e3 | g/mol |
| Mw : | 1.8926e3 | g/mol |
| Mz : | 2.1092e3 | g/mol |
| Mv : | 1.8926e3 | g/mol |
| D : | 1.1492e0 | |
| [n]: | 0.000000 | ml/g |
| Vp : | 1.8717e1 | ml |
| Mp : | 1.6596e3 | g/mol |
| FI : | 2.1686e4 | ml*V |
| < 68 | 0.00 | |
| w% : | 100.00 | |
| > 43507 | 0.00 | |

Anhand eines Vergleichs der experimentellen Daten wird erkennbar, dass das erfindungsgemäße Verfahren zu der gewünschten monomodalen Verteilung im Produkt führt. Eine Verwendung eines zusätzlich vorab hergestellten Vor-Polyols ist dazu nicht notwendig.

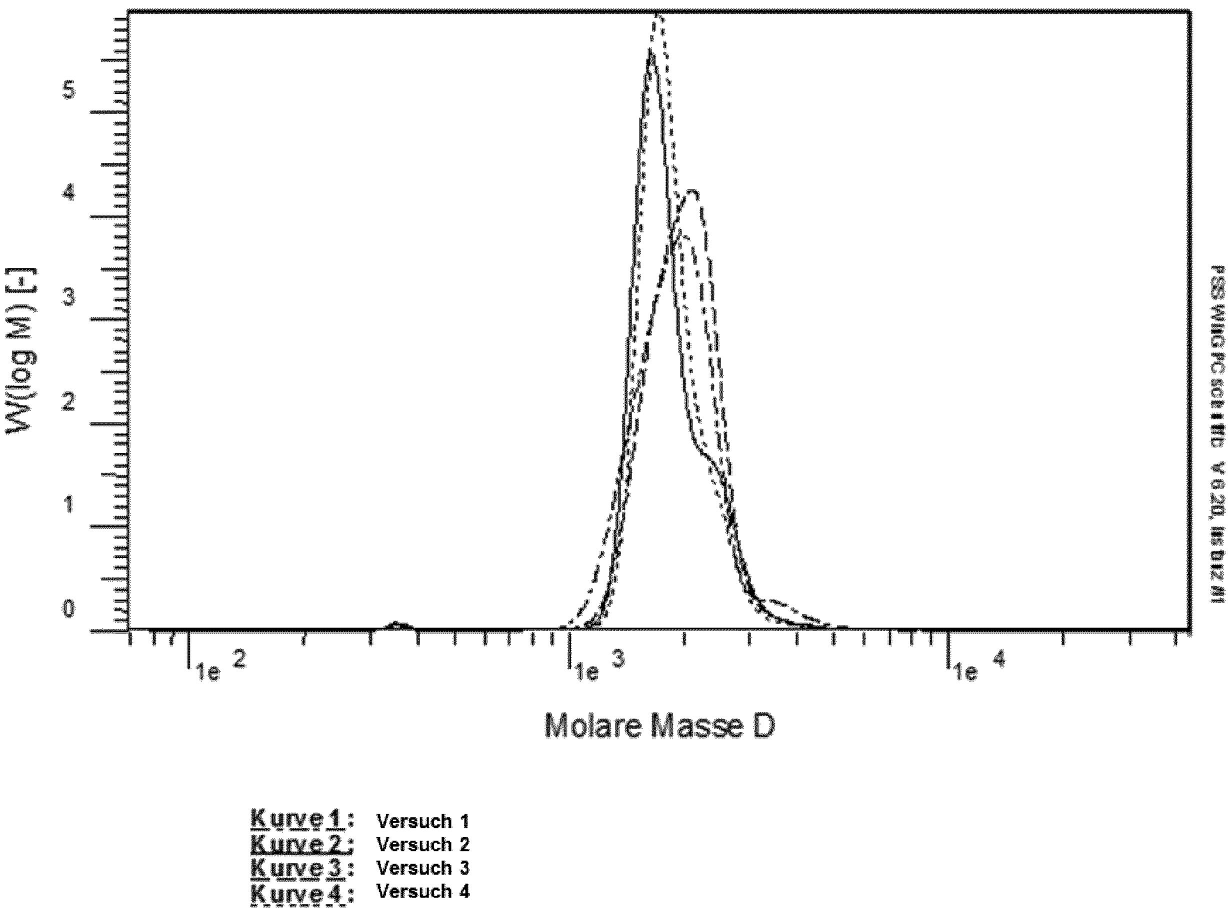


## Patentansprüche

**1.** Verfahren zur Herstellung von Polyetherpolyolen, bevorzugt von Polyetherpolyolen mit einer Funktionalität von mindestens 2, durch Reaktion mindestens eines Alkylenoxids AO mit mindestens einer Zerewitinoff-aktiven Starterverbindung S unter Multimetallcyanid-Katalyse, wobei

(i) zunächst mindestens eine Zerewitinoff-aktive Starterverbindung $S_{vor}$ im Reaktionsgefäß vorgelegt und mit dem Multimetallycanidkatalystor, bevorzugt einer Suspension des Multimetallkatalysators in einem Polyetherol oder einem Gemisch aus Polyetherolen, versetzt wird,
(ii) dann, optional nach Entfernen von Restsauerstoff aus dem Reaktionsgefäß und Trocknung des Reaktorinhalts, mindestens ein Alkylenoxid $AO_1$ zugegeben und der Reaktorin-halt für eine Zeitspanne von 1 bis 60 min gerührt wird,
(iii) darauf die Dosierung mindestens eines Alkylenoxids $AO_2$ gestartet und fortgeführt wird, und
(iv) die Dosierung mindestens einer Zerewitinoff-aktiven Starterverbindung $S_{dos}$ gestartet und fortgeführt wird, wobei die Dosierung mindestens einer, bevorzugt aller Zerewitinoff-aktiven Starterverbindungen $S_{dos}$ optional für eine Zeitspanne von 1 min bis 30 min nach Beginn der Dosierung mindestens einer, bevorzugt aller Alkylenoxide $AO_2$ beginnt, und wobei

während der gleichzeitigen Dosierung mindestens eines Alkylenoxids $AO_2$ mit mindestens einer Zerewitinoff-aktiven Starterverbindung $S_{dos}$ das Verhältnis der Dosiergeschwindigkeiten K kleiner gleich 20 beträgt, wobei
K der Formel $K = (DAO_2)/ (DS_{dos})$ genügt,
mit $(DAO_2)$ = (mittlere Dosiergeschwindigkeit der Alkylenoxide $AO_2$) und $(DS_{dos})$ = (mittlere Dosiergeschwindigkeit der Starterverbindungen $S_{dos}$),
wobei die mittlere Dosiergeschwindigkeit der Alkylenoxide $AO_2$ der Quotient ist aus der (Summe der Mengen aller dosierten Alkylenoxide $AO_2$) geteilt durch die (Zeit von Beginn der ersten Dosierung eines Alkylenoxids $AO_2$ bis zum Ende der letzten Dosierung eines Alkylenoxids $AO_2$), und

wobei die mittlere Dosiergeschwindigkeit der Zerewitinoff-aktiven Starterverbindungen $S_{dos}$ der Quotient ist aus der (Summe der Mengen aller dosierten Starterverbindungen $S_{dos}$) geteilt durch die (Zeit von Beginn der ersten Dosierung einer Zerewitinoff-aktiven Starterverbindung $S_{dos}$ bis zum Ende der letzten Dosierung einer Zerewitinoff-aktiven Starterverbindung $S_{dos}$).

**2.** Verfahren zur Herstellung von Polyetherpolyolen gemäß Anspruch 1, wobei das Verhältnis der Dosiergeschwindigkeiten K kleiner 20, bevorzugt kleiner 15, besonders bevorzugt kleiner 10 ist.

**3.** Verfahren zur Herstellung von Polyetherpolyolen gemäß Anspruch 1 oder 2, wobei die Dosiergeschwindigkeit der jeweiligen zu dosierenden Komponenten $S_{dos}$ und $AO_2$ während der Dosierzeit unabhängig voneinander variiert.

**4.** Verfahren zur Herstellung von Polyetherpolyolen gemäß Anspruch 1 oder 2, wobei die Dosiergeschwindigkeiten der jeweiligen zu dosierenden Komponenten $S_{dos}$ und/oder $AO_2$ während der Dosierzeit konstant sind.

**5.** Verfahren zur Herstellung von Polyetherpolyolen gemäß einem der Ansprüche 1 bis 4, wobei der Multimetallcyanid-Katalysator ausgewählt ist aus der Gruppe bestehend aus Doppelmetallcyanid-Katalysatoren, bevorzugt kristallinen oder nicht kristallinen Doppelmetallcyanid-Katalysatoren.

**6.** Verfahren zur Herstellung von Polyetherpolyolen gemäß einem der Ansprüche 1 bis 5, wobei der Multimetallcyanid-Katalysator ausgewählt ist aus der Gruppe bestehend aus kristallinen Doppelmetallcyanid-Katalysatoren.

**7.** Verfahren zur Herstellung von Polyetherpolyolen gemäß einem der vorangehenden Ansprüche, wobei der Multimetallcyanid-Katalysator Zinkhexacyanocobaltat ist, bevorzugt kristallines Zinkhexacyanocobaltat.

**8.** Verfahren zur Herstellung von Polyetherpolyolen gemäß einem der vorangehenden Ansprüche, wobei die Alkylenoxide $AO_1$ und $AO_2$ jeweils unabhängig voneinander ausgewählt sind aus der Gruppe enthaltend, bevorzugt bestehend aus, Ethylenoxid, Propylenoxid, Butylenoxid.

**9.** Verfahren zur Herstellung von Polyetherpolyolen gemäß einem der vorangehenden Ansprüche, wobei die gesamte Reaktionszeit höchstens zwanzig Stunden beträgt, bevorzugt höchstens zehn Stunden, besonders bevorzugt höchstens fünf Stunden.

**10.** Verfahren zur Herstellung von Polyetherpolyolen gemäß einem der vorangehenden Ansprüche, wobei mindestens eine Zerewitinoff-aktive Starterverbindung $S_{dos}$ ausgewählt ist aus der Gruppe bestehend aus Ethylenglykol, Diethylenglykol, Mono-Propylenglykol, Di-Propylenglykol, Propoxylate von Glycerin, Ethoxylate von Glycerin, Propoxylate von Propylenglykol und Ethoxylate von Ethylenglykol.

**11.** Verfahren zur Herstellung von Polyetherpolyolen gemäß einem der vorangehenden Ansprüche, wobei mindestens eine Zerewitinoff-aktive Starterverbindung $S_{dos}$ ausgewählt ist aus der Gruppe bestehend aus Mono-Propylenglykol und Dipropylenglykol.

**12.** Verfahren zur Herstellung von Polyetherpolyolen gemäß einem der vorangehenden Ansprüche, wobei alle verwendeten Zerewitinoff-aktiven Starterverbindungen $S_{dos}$ ausgewählt sind aus der Gruppe bestehend aus Mono-Propylenglykol (MPG) und Dipropylenglykol.

**13.** Verfahren zur Herstellung von Polyetherpolyolen gemäß einem der vorangehenden Ansprüche, wobei mindestens eine Zerewitinoff-aktive Starterverbindung $S_{vor}$ eine OH-Zahl im Bereich von 400 bis 3000, bevorzugt 700 bis 2500, besonders bevorzugt 800 bis 2200 mg KOH/g aufweist, gemessen nach DIN 53240.

**14.** Verfahren zur Herstellung von Polyetherpolyolen gemäß einem der vorangehenden Ansprüche, wobei alle verwendeten Zerewitinoff-aktiven Starterverbindungen $S_{vor}$ jeweils eine OH-Zahl im Bereich von 400 bis 3000, bevorzugt 700 bis 2500, besonders bevorzugt 800 bis 2200 mg KOH/g aufweisen, gemessen nach DIN 53240.

**15.** Verfahren zur Herstellung von Polyetherpolyolen gemäß einem der vorangehenden Ansprüche, wobei mindestens eine Zerewitinoff-aktive Starterverbindung $S_{vor}$ eine OH-Zahl aufweist, die sich von der OH-Zahl des Polyetherol-Endprodukts maximal um 15 % unterscheidet, bevorzugt maximal um 10 %, besonders bevorzugt maximal um 5 %, jeweils gemessen nach DIN 53240.

**16.** Verfahren zur Herstellung von Polyetherpolyolen gemäß einem der vorangehenden Ansprüche, wobei mindestens eine Zerewitinoff-aktive Starterverbindung $S_{vor}$ Polyproplenglykol mit einem über die OH-Zahl nach DIN 53240 und Funktionalität berechneten mittleren Molgewicht von 2000 +/- 5 % ist.

**17.** Verfahren zur Herstellung von Polyetherpolyolen gemäß einem der vorangehenden Ansprüche, wobei mindestens ein Alkylenoxid Propylenoxid ist.

**18.** Verfahren zur Herstellung von Polyetherpolyolen gemäß einem der vorangehenden Ansprüche, wobei ausschließlich Propylenoxid als Alkylenoxid verwendet wird.

**19.** Verfahren zur Herstellung von Polyetherpolyolen gemäß einem der vorangehenden Ansprüche, wobei kein Ethylenoxid verwendet wird.

**20.** Verfahren zur Herstellung von Polyetherpolyolen gemäß einem der vorangehenden Ansprüche, wobei kein Butylenoxid verwendet wird.

**21.** Verfahren zur Herstellung von Polyetherpolyolen gemäß einem der vorangehenden Ansprüche, wobei die gesamte Menge an $AO_1$ kleiner als 5 Gew. % beträgt, bezogen auf die Summe der gesamten Mengen an $AO_1$ und $AO_2$.

**22.** Verfahren zur Herstellung von Polyetherpolyolen gemäß einem der vorangehenden Ansprüche, wobei $AO_1$ gleich $AO_2$ ist.

**23.** Verfahren zur Herstellung von Polyetherpolyolen gemäß einem der Ansprüche 1 bis 21, wobei $AO_1$ ungleich $AO_2$ ist.

**24.** Verfahren zur Herstellung von Polyetherpolyolen gemäß einem der vorangehenden Ansprüche, wobei die Dosierung mindestens eines Alkylenoxids $AO_2$ für mindestens 30 Minuten, bevorzugt für mindestens 90 Minuten gleichzeitig mit der Dosierung mindestens einer Zerewitinoff-aktiven Starterverbindung $S_{dos}$ erfolgt.

**25.** Verfahren zur Herstellung von Polyetherpolyolen gemäß Anspruch einem der vorangehenden Ansprüche, wobei die Dosierung aller Alkylenoxide zumindest zeitweise gleichzeitig mit der Dosierung aller Zerewitinoff-aktiven Starterverbindungen erfolgt.

**26.** Verfahren zur Herstellung von Polyetherpolyolen gemäß einem der vorangehenden Ansprüche, wobei die Dosierung aller Alkylenoxide $AO_2$ für mindestens 30 Minuten, bevorzugt für mindestens 90 Minuten gleichzeitig mit der Dosierung aller Zerewitinoff-aktiven Starterverbindungen $S_{dos}$ erfolgt.

**27.** Verfahren zur Herstellung von Polyetherpolyolen gemäß einem der vorangehenden Ansprüche, wobei die Dosierung mindestens eines Alkylenoxids $AO_2$ vor dem Beginn der Dosierung mindestens einer Zerewitinoff-aktiven Starterverbindung $S_{dos}$ beginnt.

**28.** Verfahren zur Herstellung von Polyetherpolyolen gemäß einem der vorangehenden Ansprüche, wobei die Dosierung mindestens eines Alkylenoxids $AO_2$ mindestens 5 Minuten, optional mindestens 10 Minuten, vor dem Beginn der Dosierung mindestens einer Zerewitinoff-aktiven Starterverbindung $S_{dos}$ beginnt.

**29.** Verfahren zur Herstellung von Polyetherpolyolen gemäß einem der vorangehenden Ansprüche, wobei die Dosierung aller Alkylenoxide $AO_2$ vor dem Beginn jeglicher Dosierung von Zerewitinoff-aktiven Starterverbindungen $S_{dos}$ beginnt.

**30.** Verfahren zur Herstellung von Polyetherpolyolen gemäß einem der vorangehenden Ansprüche, wobei die Dosierung aller Alkylenoxide $AO_2$ mindestens 5 Minuten, optional mindestens 10 Minuten vor jeglicher Dosierung von Zerewitinoff-aktiven Starterverbindungen $S_{dos}$ beginnt.

**31.** Verfahren zur Herstellung von Polyetherpolyolen gemäß einem der vorangehenden Ansprüche, wobei der Anteil von Ethylenoxid im Polyetherpolyol-Produkt kleiner als 15 Gew. %, bezogen auf das Gesamtprodukt, ist.

**32.** Polyetherpolyol, herstellbar nach dem Verfahren eines der Ansprüche 1 bis 31.

**33.** Verfahren zur Herstellung eines Polyurethans, wobei ein Polyetherpolyol, herstellbar nach einem der Ansprüche 1

bis 31, mit mindestens einem Di- oder Polyisocyanat zur Reaktion gebracht wird, wahlweise in Gegenwart eines Treibmittels.

Europäisches Patentamt
European Patent Office
Office européen des brevets

# EUROPÄISCHER RECHERCHENBERICHT

Nummer der Anmeldung
EP 15 18 4129

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 772 330 B2 (LORENZ KLAUS [DE] ET AL) 10. August 2010 (2010-08-10) * Beispiele 1-4 * ----- | 1-31 | INV. C08G65/26 |
| X,D | US 2005/203274 A1 (BOHRES EDWARD [DE] ET AL) 15. September 2005 (2005-09-15) * Absatz [0002]; Beispiel 2 * ----- | 32,33 | |
| A | WO 97/29146 A1 (ARCO CHEM TECH [US]; ARCO CHEM TECH NL BV [NL]) 14. August 1997 (1997-08-14) * Seite 6, Zeilen 10-14; Beispiele 1-2 * ----- | 1-33 | |
| A | WO 99/14258 A1 (ARCO CHEM TECH [US]; ARCO CHEM TECH NL BV [NL]) 25. März 1999 (1999-03-25) * Seite 9, Zeilen 1-21 * * Seite 14, Zeile 10 - Seite 16, Zeile 4; Beispiele 1-3 * ----- | 1-33 | |
| A | EP 2 726 534 B1 (BAYER IP GMBH [DE]) 4. März 2015 (2015-03-04) * Absatz [0051]; Ansprüche 1,5,8,15 * ----- | 1-33 | RECHERCHIERTE SACHGEBIETE (IPC): C08G |
| A | WO 2011/113729 A1 (BAYER MATERIALSCIENCE AG [DE]; LORENZ KLAUS [DE]) 22. September 2011 (2011-09-22) * Beispiel 1 * ----- | 1-33 | |

Der vorliegende Recherchenbericht wurde für alle Patentansprüche erstellt

1

| Recherchenort | Abschlußdatum der Recherche | Prüfer |
|---|---|---|
| Den Haag | 11. Dezember 2015 | Hoffmann, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 15 18 4129

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2015

| Im Recherchenbericht angeführtes Patentdokument | Datum der Veröffentlichung | Mitglied(er) der Patentfamilie | Datum der Veröffentlichung |
|---|---|---|---|
| US 7772330 B2 | 10-08-2010 | BR PI0701656 A | 15-01-2008 |
| | | CA 2588898 A1 | 23-11-2007 |
| | | CN 101077964 A | 28-11-2007 |
| | | DE 102006024025 A1 | 29-11-2007 |
| | | EP 1859863 A2 | 28-11-2007 |
| | | JP 2007314787 A | 06-12-2007 |
| | | KR 20070113141 A | 28-11-2007 |
| | | SG 137810 A1 | 28-12-2007 |
| | | US 2007276099 A1 | 29-11-2007 |
| | | US 2010125126 A1 | 20-05-2010 |
| US 2005203274 A1 | 15-09-2005 | AT 312862 T | 15-12-2005 |
| | | AU 2003242723 A1 | 06-01-2004 |
| | | CN 1662576 A | 31-08-2005 |
| | | DE 10228254 A1 | 22-01-2004 |
| | | EP 1517940 A1 | 30-03-2005 |
| | | JP 4300186 B2 | 22-07-2009 |
| | | JP 2005539101 A | 22-12-2005 |
| | | MX PA04011558 A | 07-03-2005 |
| | | US 2005203274 A1 | 15-09-2005 |
| | | WO 2004000913 A1 | 31-12-2003 |
| WO 9729146 A1 | 14-08-1997 | AR 005711 A1 | 14-07-1999 |
| | | AU 720298 B2 | 25-05-2000 |
| | | AU 1598397 A | 28-08-1997 |
| | | BR 9706971 A | 06-04-1999 |
| | | CA 2245563 A1 | 14-08-1997 |
| | | CN 1210549 A | 10-03-1999 |
| | | CZ 9802481 A3 | 17-02-1999 |
| | | DE 69705605 D1 | 16-08-2001 |
| | | DE 69705605 T2 | 08-11-2001 |
| | | EP 0879259 A1 | 25-11-1998 |
| | | ES 2158490 T3 | 01-09-2001 |
| | | ID 15891 A | 14-08-1997 |
| | | JP 4538103 B2 | 08-09-2010 |
| | | JP 2000504753 A | 18-04-2000 |
| | | JP 2007277583 A | 25-10-2007 |
| | | PL 328018 A1 | 04-01-1999 |
| | | RU 2191784 C2 | 27-10-2002 |
| | | TW 518345 B | 21-01-2003 |
| | | US 5777177 A | 07-07-1998 |
| | | US 5919988 A | 06-07-1999 |
| | | WO 9729146 A1 | 14-08-1997 |
| | | ZA 9700987 A | 18-08-1997 |
| WO 9914258 A1 | 25-03-1999 | AU 737141 B2 | 09-08-2001 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 15 18 4129

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2015

| Im Recherchenbericht angeführtes Patentdokument | Datum der Veröffentlichung | Mitglied(er) der Patentfamilie | Datum der Veröffentlichung |
|---|---|---|---|
| | | AU 9739098 A | 05-04-1999 |
| | | BR 9812211 A | 25-07-2000 |
| | | CA 2301210 A1 | 25-03-1999 |
| | | CN 1270607 A | 18-10-2000 |
| | | CZ 20000970 A3 | 15-11-2000 |
| | | DE 69804234 D1 | 18-04-2002 |
| | | DE 69804234 T2 | 19-09-2002 |
| | | EP 1017738 A1 | 12-07-2000 |
| | | ES 2174496 T3 | 01-11-2002 |
| | | HK 1029799 A1 | 07-06-2002 |
| | | ID 24339 A | 13-07-2000 |
| | | JP 4335437 B2 | 30-09-2009 |
| | | JP 2001516782 A | 02-10-2001 |
| | | KR 100555707 B1 | 03-03-2006 |
| | | PL 339267 A1 | 04-12-2000 |
| | | TW 397848 B | 11-07-2000 |
| | | US 6077978 A | 20-06-2000 |
| | | WO 9914258 A1 | 25-03-1999 |
| EP 2726534 B1 | 04-03-2015 | CA 2840520 A1 | 03-01-2013 |
| | | CN 103635506 A | 12-03-2014 |
| | | EP 2726534 A1 | 07-05-2014 |
| | | ES 2537891 T3 | 15-06-2015 |
| | | JP 2014518302 A | 28-07-2014 |
| | | KR 20140038996 A | 31-03-2014 |
| | | SG 195164 A1 | 30-12-2013 |
| | | US 2014142344 A1 | 22-05-2014 |
| | | WO 2013000915 A1 | 03-01-2013 |
| WO 2011113729 A1 | 22-09-2011 | CA 2792678 A1 | 22-09-2011 |
| | | CN 102822234 A | 12-12-2012 |
| | | EP 2365019 A1 | 14-09-2011 |
| | | EP 2547713 A1 | 23-01-2013 |
| | | ES 2471401 T3 | 26-06-2014 |
| | | JP 2013522404 A | 13-06-2013 |
| | | KR 20130034008 A | 04-04-2013 |
| | | RU 2012143696 A | 20-04-2014 |
| | | SG 183441 A1 | 30-10-2012 |
| | | US 2013204047 A1 | 08-08-2013 |
| | | WO 2011113729 A1 | 22-09-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 69735298 T2
- DE 69804234 T3
- WO 9914258 A
- EP 1808475 A2
- WO 2011113792 A
- EP 1528073 A
- EP 1983016 A
- EP 1983015 A
- WO 0074845 A
- US 6303833 B1
- US 6613714 B2
- US 6689710 B2
- US 7470823 B2
- US 2004249221 A1
- US 20050203274 A1
- US 2008300376 A1


### In der Beschreibung aufgeführte Nicht-Patentliteratur


- **MIHAIL LONESCU.** Chemistry and Technology of Polyols for Polyurethanes. rapra Technolgy Limited, 2005